# EUROPEAN PATENT APPLICATION

(11) **EP 0 882 497 A1**
(43) Date of publication of application: **09.12.1998**
(21) Application number: 97201726.3
(22) Date of filing: 06.06.1997
(51) Int. Cl.: B01J 8/00, B01J 19/14, B01J 23/755

(54) **Process for performing a catalytic reaction using a nickel catalyst under exclusion of oxygen**

(71) Applicant: ENGELHARD CORPORATION, Iselin, New Jersey 08830-0770 (US)
(72) Inventor: Berben, Pieter Hildegardus, 3951 EE Maarn (NL); Dijkstra, Willem, 9023 AG Jorwerd (NL); Reesink, Bernard Hendrik, 3941 BT Doorn (NL)
(74) Representative: Smulders, Theodorus A.H.J., Ir.

(57) **Abstract**

The invention is directed to a process for performing a chemical reaction in the presence of an active (reduced) nickel catalyst in powder form, which process comprises feeding a reduced nickel catalyst from a container in which the nickel catalyst is kept under exclusion of oxygen, into a reactor and carrying out the reaction

## Description

The present invention is directed to a process for performing a chemical reaction in the presence of an active (reduced) nickel catalyst in powder form. This type of reaction is conventionally a hydrogenation or an amination reaction, more in particularly in slurry phase.

In the production of nickel catalysts the material is first obtained in a form wherein the nickel is present as an oxide. These oxides are subsequently reduced to obtain the active nickel. Nickel catalysts in reduced form, i.e. containing active nickel metal, however, have the property that they are pyrophore, i.e. they spontaneously react with oxygen in an uncontrolled manner. This means that after production and prior to shipping to the customer, it is necessary to treat the catalyst in some way to prevent this.

In general, there are at present three possibilities for this treatment. A first possibility is to passivate the catalyst. This means that the catalyst is given a mild oxidising treatment, due to which a thin oxide layer is formed on the surface of the nickel, protecting the bulk of the nickel against contact with oxygen (air). Prior to actual use the customer reactivates the catalyst by reduction with hydrogen, usually in the reactor. Although this method has been in use at a large scale, it tends to result in loss of activity of the catalyst.

Further disadvantages of this method are that it is rather difficult to control, it is time consuming and the reactivation requires an additional processing step. Especially in low temperature applications (<130°C) the reactivation is difficult to carry out.

A second possibility is to incorporate the powder in a matrix of fat or another suitable material. This may introduce foreign matter into the reactor. Also the matrix may be slightly permeable for oxygen, resulting therein that the catalyst tends to deactivate slowly in time.

A third and last possibility is the shipping and storage of the catalyst submerged in a liquid. This has substantially the same disadvantages as the second possibility.

Accordingly there exists a need for transporting, storing, handling and feeding catalyst to a reactor in such a way that the disadvantages of the conventional systems do not occur. Further there is a need for improvement in the performance of nickel catalysts in powder form, especially in terms of activity.

The process of the invention aims at obtaining these effects. This process comprises performing a chemical reaction in the presence of an active (reduced) nickel catalyst in powder form, such a a hydrogenation reaction, whereby the process comprises feeding a reduced nickel catalyst from a container in which the nickel catalyst is kept under exclusion of oxygen, into a reactor, while maintaining the exclusion of oxygen, and carrying out the reaction.

The principle of the invention is based thereon, that the nickel catalyst powder is prepared and is stored in reduced form in a special container with exclusion of oxygen (air), preferably under inert gas. In this context 'inert' is used to indicate each gas that does not react with the reduced (active) surface of the catalyst. It is also possible to exclude oxygen from the catalyst in other ways, such a storing under liquid (solvent). Important is the fact that no oxygen can reach the metal surface. Preferred is exclusion of oxygen by the use of an inert gas, more in particular nitrogen, argon, helium, CO₂ and hydrogen. Most preferred is nitrogen.

This container is subsequently shipped to the plant (reactor) where it is to be used. Using suitable equipment the container is connected to the reactor and the content of the container is removed from the container and introduced into the reactor. This transfer is also under exclusion of air. Of course the reactor will already have been flushed to remove any oxygen therefrom.

Surprisingly, it has been discovered that when carrying out the process in this way the nickel catalyst shows an improved performance, resulting in a higher activity per weight of catalyst, a higher reaction rate and in edible oil hydrogenation, an improved low temperature activity.

These effects are quite surprising, as the skilled person would not expect an effect from a difference in the way the catalyst is fed into the reactor.

The process of the invention is carried out with industrial scale reactors, i.e. reactors having a volume of over 50 l, more in particular over 100 l, resp 250 l. The upper limit of the volume has no influence on the performance of the catalyst in terms of the invention, but is generally limited by considerations of construction and economics.

The invention is especially suited for slurry phase hydrogenations, which generally comprise reaction of a feedstock in a liquid phase, containing dispersed catalyst particles.

Especially when a high catalyst loading is to be used, such as in the case of resin hydrogenation, the use of a matrix material is impossible in view of contamination of the resins, and the present invention provides a possibility to perform such reactions in a very economical manner at an industrial scale.

Further advantages of the invention reside therein that the production and use of the catalyst requires less process steps.

The present invention is applicable to the use of a powder nickel catalyst on an industrial scale. More in particular it also provides a possibility to apply supported nickel catalyst in applications where conventionally only Raney nickel catalysts could be used. Examples of suitable applications for the invention are the various slurry phase hydrogenations, wherein Raney nickel is used, such as hydrogenation of aromatics, olefins, alkyns, carbonyl compounds, nitriles and nitro-compounds, but also in amination reactions.

The nickel catalyst can be any supported nickel catalyst, containing from 1 to 99.5 wt.% of nickel. Conventional supports may be used, examples of which are alumina, silica, silica-alumina, titania, zirconia, phosphates, and the like.

The container in which the catalyst may be packed for storage and transport to the plant can have any suitable form, provided it meets the criteria for the transport of dangerous goods, such as defined in the European Agreement concerning the international carriage of Dangerous goods by Road (ADR). Generally the packagings may be steel, aluminium or plastic drums or jerrycans.

At the plant the catalyst can be introduced into the reactor using suitable means for exclusion of oxygen. These means may include screw conveyors, belt conveyors, vibration based conveyors and the like, optionally including means for determining the amount (weight) of the catalyst introduced into the reactor.

The invention is further explained on the basis of the following, non limiting examples.

### Example

A supported nickel on silica catalyst, 70 wt.% of nickel, is stored under nitrogen after reduction. While excluding the catalyst from contact with oxygen, 0.75 wt.% of catalyst, calculated on the reactor contents, is introduced into a reactor containing a 50 wt.% solution of an aromatic compound to be hydrogenated, at ambient temperature.

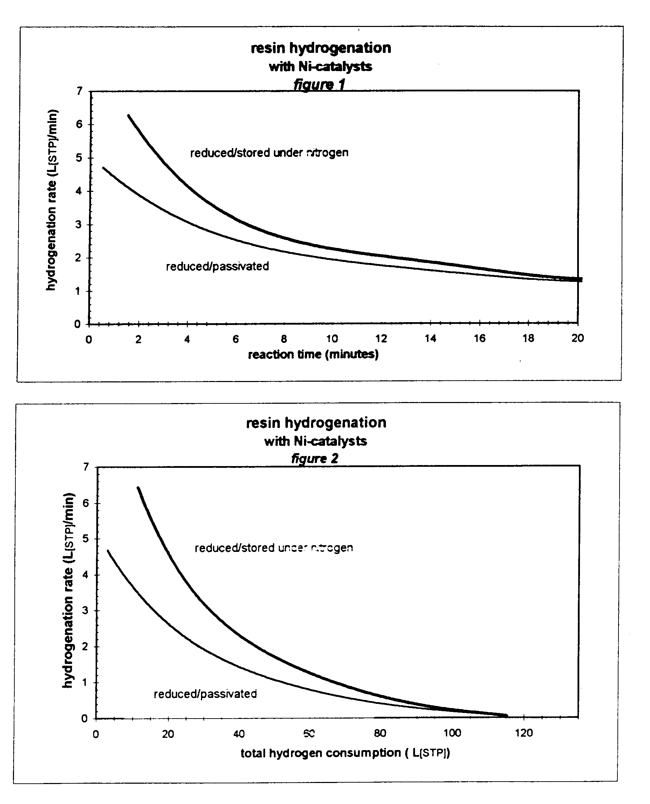

After purging the reactor is pressurised to 4 bar hydrogen and agited under heating to 250°C. The hydrogen pressure is raised to 100 bar. The hydrogenation rate is monitored. The results are given in the attached figures 1 and 2.

After 4 hours the reaction is terminated and the aromaticity of the final product is determined.

As a comparison the same catalyst, however, in passivated form is used. Following activation the reaction is performed in the same manner. The results are also given in the figures.

The aromaticity of the marerial obtained in this manner was 50 % higher.

## Claims

1. Process for performing a chemical reaction in the presence of an active (reduced) nickel catalyst in powder form, which process comprises feeding a reduced nickel catalyst from a container in which the nickel catalyst is kept under exclusion of oxygen, into a reactor, while maintaining the exclusion of oxygen and carrying out the reaction.

2. Process according to claim 1, wherein the catalyst is stored and/or fed into the reactor under inert gas.

3. Process according to claim 2, wherein the inert gas is selected from the group consisting of nitrogen, argon, helium, CO₂ and hydrogen.

4. Process according to claim 1-3, wherein the catalyst is a supported nickel catalyst.

5. Process according to claim 4, wherein the support is silica, alumina, silica-alumina, titania, zirconia and combinations thereof.

6. Process according to claim 1-5 wherein the nickel content of the catalyst is between 1 and 99.5 wt.%, calculated on the weight of the catalyst.
